(19) Europäisches Patentamt
European Patent Office
Office européen des brevets

(11) EP 3 689 928 A1

# (12) EUROPEAN PATENT APPLICATION
published in accordance with Art. 153(4) EPC

(43) Date of publication:
**05.08.2020 Bulletin 2020/32**

(21) Application number: **18858803.2**

(22) Date of filing: **15.09.2018**

(51) Int Cl.:
***C08F 290/06*** *(2006.01)* ***C04B 24/26*** *(2006.01)*
***C04B 24/32*** *(2006.01)* ***C08F 299/02*** *(2006.01)*
***C08L 33/00*** *(2006.01)* ***C04B 103/40*** *(2006.01)*

(86) International application number:
**PCT/JP2018/034316**

(87) International publication number:
**WO 2019/059143 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2017 JP 2017183971**

(71) Applicant: **Dai-Ichi Kogyo Seiyaku Co., Ltd.**
**Kyoto-shi, Kyoto 600-8873 (JP)**

(72) Inventors:
- **JOYABU Masatake**
  **kyoto-shi**
  **Kyoto 600-8873 (JP)**
- **SHIOHARA Kei**
  **kyoto-shi**
  **Kyoto 600-8873 (JP)**
- **OGASAWARA Asako**
  **kyoto-shi**
  **Kyoto 600-8873 (JP)**
- **KIMURA Takuro**
  **kyoto-shi**
  **Kyoto 600-8873 (JP)**
- **TAO Chi**
  **kyoto-shi**
  **Kyoto 600-8873 (JP)**
- **TAKAMACHI Yuki**
  **kyoto-shi**
  **Kyoto 600-8873 (JP)**

(74) Representative: **TBK**
**Bavariaring 4-6**
**80336 München (DE)**

## (54) COPOLYMER, DISPERSANT, AND DISPERSION COMPOSITION

(57) Provided is a copolymer that can be used as a dispersant having high dispersibility and high slump retention capability.

A copolymer according to an embodiment is a water-soluble copolymer that contains, as constituent monomers, at least one monomer selected from a monomer (A) represented by formula (1) and a monomer (B) represented by formula (2), and at least one monomer (C) selected from an unsaturated carboxylic acid monomer (C-1) and an oxyethylene group-containing unsaturated carboxylic acid ester (C-2). The content of the monomer (C) is 20 mass% or more and 99 mass% or less.

[Chem. 1]

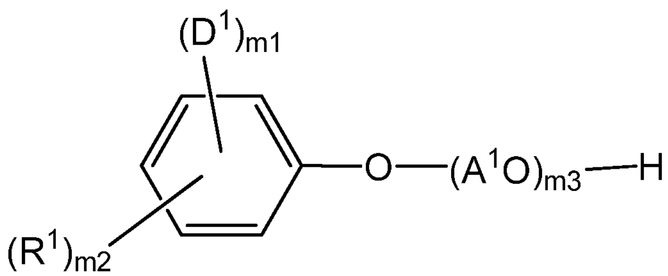

(1)

EP 3 689 928 A1

$D^1$:

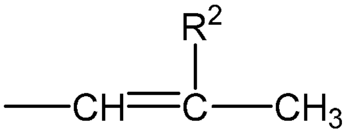 or 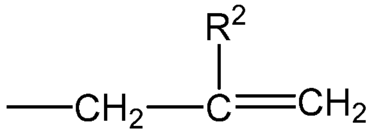

$R^1$:

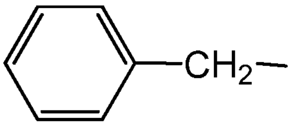 or 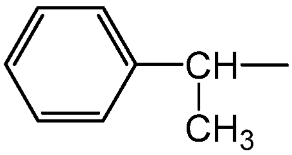 or 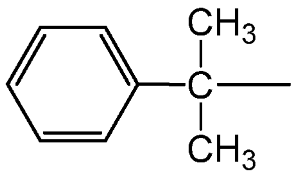

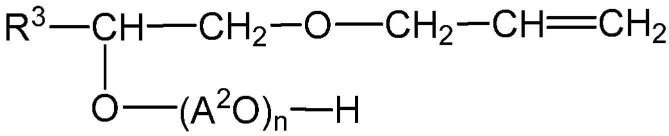

(2)

## Description

Technical Field

An embodiment of the present invention relates to a copolymer, a dispersant containing the copolymer, and a dispersion composition including the dispersant.

Background Art

In improving the strength and durability of concrete, reducing the unit water content in the concrete is effective. However, it is known that reducing the unit water content decreases the flowability of the concrete and impairs workability.

Thus, dispersants for dispersing cement and the like are under study as approaches to improving workability while reducing the unit water content. For example, PTL 1 discloses a copolymer of at least three polyoxyalkyl ester monomers of unsaturated carboxylic acids and an unsaturated monocarboxylic acid monomer. PTL 2 discloses a copolymer of an unsaturated polyalkylene glycol alkenyl ether monomer, an unsaturated carboxylic acid monomer, and a sulfonic (sulfonate) group-containing monomer. However, the copolymers disclosed in PTLs 1 and 2 are not sufficiently satisfactory in dispersibility and slump retention capability.

Citation List

Patent Literature

PTL 1: Japanese Unexamined Patent Application Publication No. 2016-179926
PTL 2: Japanese Unexamined Patent Application Publication No. 2016-23096

Summary of Invention

Technical Problem

In view of the above, an object of the embodiment of the present invention is to provide a novel copolymer that can be used, for example, as a dispersant having high dispersibility and high slump retention capability. Solution to Problem

A copolymer according to a first embodiment of the present invention is a copolymer containing, as constituent monomers, at least one monomer selected from the group consisting of a monomer (A) represented by general formula (1) below and a monomer (B) represented by general formula (2) below, and at least one monomer (C) selected from the group consisting of an unsaturated carboxylic acid monomer (C-1) and an oxyethylene group-containing unsaturated carboxylic acid ester (C-2). The content of the monomer (C) in the constituent monomers is 20 mass% or more and 99 mass% or less.

A copolymer according to a second embodiment of the present invention is a water-soluble copolymer containing, as constituent monomers, at least one monomer selected from the group consisting of a monomer (A) represented by general formula (1) below and a monomer (B) represented by general formula (2) below, and at least one monomer (C) selected from the group consisting of an unsaturated carboxylic acid monomer (C-1) and an oxyethylene group-containing unsaturated carboxylic acid ester (C-2).

[Chem. 1]

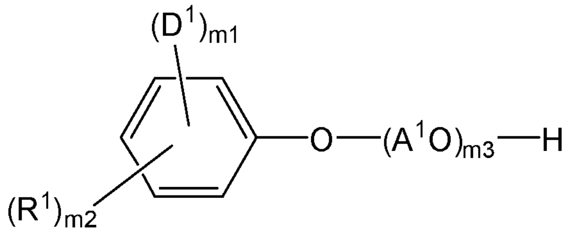

(1)

In formula (1), $D^1$ represents at least one polymerizable unsaturated group selected from the group consisting of groups

$D^1$-1 and $D^1$-2 below, where $R^2$ represents a hydrogen atom or a methyl group; $R^1$ represents at least one group selected from the group consisting of groups $R^1$-1, $R^1$-2, and $R^1$-3 below; m1 and m2 are each 1 to 2 in terms of an average of the whole monomer (A); $A^1$ represents an alkylene group having 2 to 4 carbon atoms; and m3 represents an average number of moles of oxyalkylene groups added and is a number of 1 to 100.

[Chem. 2]

$D^1$-1: 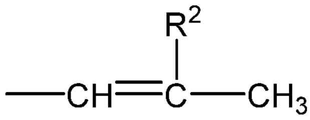

$D^1$-2: 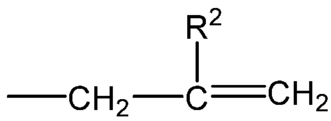

[Chem. 3]

$R^1$-1: 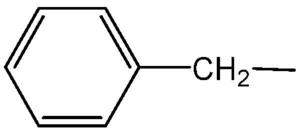

$R^1$-2: 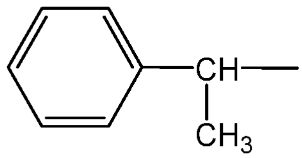

$R^1$-3: 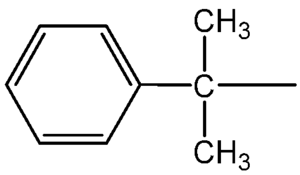

[Chem. 4]

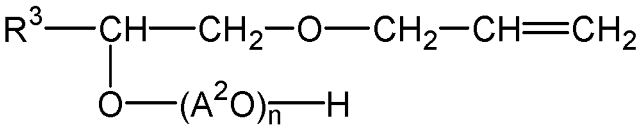

(2)

In formula (2), $R^3$ represents an alkyl group having 8 to 14 carbon atoms, $A^2$ represents an alkylene group having 2 to 4 carbon atoms, and n represents an average number of moles of oxyalkylene groups added and is a number of 1 to 100.

An aqueous solution according to an embodiment of the present invention contains the copolymer according to the above embodiment. A dispersant according to an embodiment of the present invention contains the copolymer according to the above embodiment. A dispersion composition according to an embodiment of the present invention contains particles and the dispersant.

Advantageous Effects of Invention

The copolymer according to the embodiment of the present invention, when used, for example, as a dispersant, can improve dispersibility and slump retention capability. Description of Embodiments

[Monomer (A)]

A monomer (A) is represented by general formula (1) below.

[Chem. 5]

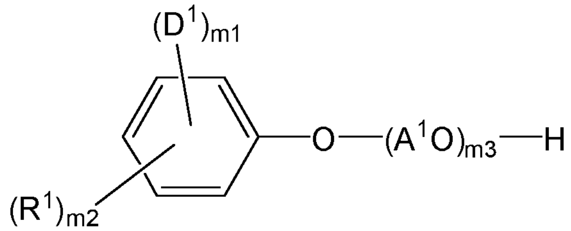

(1)

In general formula (1), $D^1$ represents at least one polymerizable unsaturated group selected from the group consisting of a group $D^1$-1 (i.e., a group represented by formula $D^1$-1 below) and a group $D^1$-2 (i.e., a group represented by formula $D^1$-2 below). Therefore, when a plurality of groups $D^1$ are contained in one molecule, they may be the same as or different from each other. Also in the whole monomer (A), all the groups $D^1$ may be the same, or the monomer (A) may be a mixture of compounds having different groups $D^1$.

[Chem. 6]

$D^1$-1: 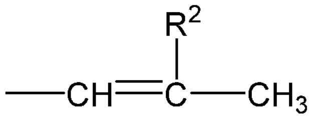

$D^1$-2: 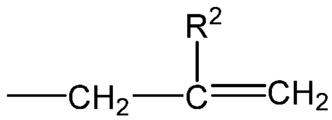

$R^2$ in the formulae of the groups $D^1$-1 and $D^1$-2 represents a hydrogen atom or a methyl group. Therefore, $D^1$ specifically represents a 1-propenyl group, a 2-methyl-1-propenyl group, or a (meth)allyl group. $D^1$ may be any one of a 1-propenyl group, a 2-methyl-1-propenyl group, or a (meth)allyl group or a mixture thereof. $D^1$ is preferably a 1-propenyl group. The term "(meth)allyl group" means an allyl group and/or a methallyl group.

The number m1 of substituent groups $D^1$ is in the range of 1 to 2 in terms of the average of the whole monomer (A). For higher dispersibility, m1 is preferably more than 1, more preferably 1.1 or more, still more preferably 1.2 or more. For higher dispersibility, m1 is preferably 1.8 or less, more preferably 1.5 or less. The group $D^1$-1 and the group $D^1$-2 preferably have a molar ratio $(D^1\text{-}1)/(D^1\text{-}2)$ of greater than 2. The substitution position of $D^1$ is preferably the ortho position and/or the para position, more preferably the ortho position.

In general formula (1), $R^1$ represents at least one group selected from the group consisting of a group $R^1$-1 (i.e., a group represented by formula $R^1$-1 below), a group $R^1$-2 (i.e., a group represented by formula $R^1$-2 below), and a group $R^1$-3 (i.e., a group represented by formula $R^1$-3 below). Therefore, when a plurality of groups $R^1$ are contained in one molecule, they may be the same as or different from each other. Also in the whole monomer (A), all the groups $R^1$ may be the same, or the monomer (A) may be a mixture of compounds having different groups $R^1$.

[Chem. 7]

$R^1$-1: 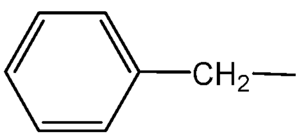

$R^1$-2: 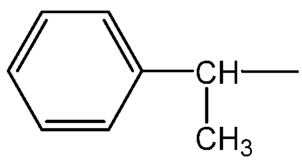

$R^1$-3: 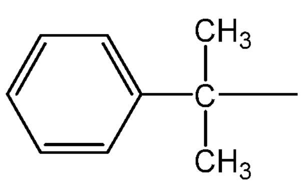

The number m2 of substituent groups $R^1$ is in the range of 1 to 2 in terms of the average of the whole monomer (A). For higher dispersibility, m2 is preferably more than 1, more preferably 1.1 or more, still more preferably 1.2 or more.

For higher dispersibility, m2 is preferably 1.8 or less, more preferably 1.5 or less. For higher dispersibility, the sum of the numbers m1 and m2 is preferably 2 or more. For higher dispersibility, the sum of the numbers m1 and m2 is preferably 3 or less. The substitution position of $R^1$ is preferably the ortho position and/or the para position.

$A^1$ in general formula (1) represents an alkylene group (i.e., an alkanediyl group) having 2 to 4 carbon atoms. The alkylene group may be linear or branched. Therefore, examples of oxyalkylene groups represented by $A^1O$ include an oxyethylene group, an oxypropylene group, and an oxybutylene group. The $(A^1O)_{m3}$ chain moiety in general formula (1) is an addition polymer constituted by one or more alkylene oxides having 2 to 4 carbon atoms, such as ethylene oxide, propylene oxide, butylene oxide, and tetrahydrofuran (1,4-butylene oxide). The addition form of oxyalkylene groups is not particularly limited. A single adduct constituted by one alkylene oxide or a random or block adduct constituted by two or more alkylene oxides may be employed. Alternatively, the random adduct and the block adduct may be combined with each other.

For higher slump retention capability, the oxyalkylene group is preferably an oxyethylene group. When two or more oxyalkylene groups are selected, one of them is preferably an oxyethylene group. For higher slump retention capability, the $(A^1O)_{m3}$ chain moiety is a (poly)oxyalkylene chain containing an oxyethylene group in an amount of preferably 50 to 100 mol%, more preferably 70 to 100 mol%.

m3 represents an average number of moles of oxyalkylene groups added and is a number in the range of 1 to 100. For higher slump retention capability, m3 is preferably 5 to 80, more preferably 10 to 50.

The method for producing the monomer (A) represented by general formula (1) is not particularly limited. For example, the monomer (A) is obtained by a method described in paragraphs 0020 to 0025 of WO2013/108588A1 or a method described in paragraphs 0024 to 0027 of Japanese Unexamined Patent Application Publication No. 2015-13921.

[Monomer (B)]

A monomer (B) is a polyoxyalkylene-1-(allyloxymethyl)alkyl ether represented by general formula (2) below.

[Chem. 8]

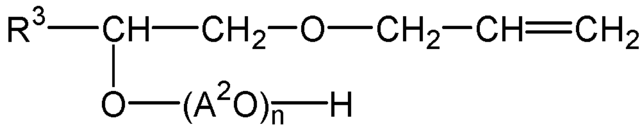

(2)

In general formula (2), $R^3$ represents an alkyl group having 8 to 14 carbon atoms. The alkyl group may be linear or branched. For higher dispersibility, $R^3$ is preferably an alkyl group having 10 or more carbon atoms, and preferably an alkyl group having 12 or less carbon atoms. The monomer (B) may be a mixture of compounds having groups $R^3$ with different numbers of carbon atoms.

$A^2$ in general formula (2) represents an alkylene group having 2 to 4 carbon atoms. The alkylene group may be linear or branched. Therefore, examples of oxyalkylene groups represented by $A^2O$ include an oxyethylene group, an oxypropylene group, and an oxybutylene group. The $(A^2O)_{n3}$ chain moiety in general formula (2) is an addition polymer constituted by one or more alkylene oxides having 2 to 4 carbon atoms, such as ethylene oxide, propylene oxide, butylene oxide, and tetrahydrofuran. The addition form of oxyalkylene groups is not particularly limited. A single adduct constituted by one alkylene oxide or a random or block adduct constituted by two or more alkylene oxides may be employed. Alternatively, the random adduct and the block adduct may be combined with each other.

For higher slump retention capability, the oxyalkylene group is preferably an oxyethylene group. When two or more oxyalkylene groups are selected, one of them is preferably an oxyethylene group. For higher slump retention capability, the $(A^2O)_n$ chain moiety is a (poly)oxyalkylene chain containing an oxyethylene group in an amount of preferably 50 to 100 mol%, more preferably 70 to 100 mol%.

n represents an average number of moles of oxyalkylene groups added and is a number in the range of 1 to 100. For higher slump retention capability, n is preferably 5 or more, more preferably 10 or more, still more preferably 20 or more. n is preferably 90 or less, more preferably 80 or less, still more preferably 55 or less.

The method for producing the monomer (B) represented by general formula (2) is not particularly limited. The monomer (B) can be synthesized by a known method. For example, allyl alcohol and α-olefin epoxide are allowed to react with each other in the presence of a basic substance such as potassium hydroxide to obtain a 2-hydroxyalkyl allyl ether. A predetermined amount of alkylene oxide is added to the 2-hydroxyalkyl allyl ether by a known method to obtain the monomer (B) represented by general formula (2).

[Monomer (C)]

An unsaturated carboxylic acid monomer (C-1) (hereinafter also referred to simply as a monomer (C-1)) is an unsaturated carboxylic acid and/or a salt thereof. The monomer (C-1) may be an unsaturated monocarboxylic acid and/or a salt thereof or an unsaturated dicarboxylic acid and/or a salt thereof. Examples of salts include alkali metal salts, alkaline-earth metal salts, alkylammonium salts, alkanolammonium salts, and ammonium salts. The monomer (C-1) may be a mixture of two or more compounds.

Specifically, for example, the monomer (C-1) is preferably at least one selected from the group consisting of acrylic acid, methacrylic acid, maleic acid, fumaric acid, and salts thereof. Therefore, a monomer (C-1) according to a preferred embodiment is represented by general formula (3) below.

[Chem. 9]

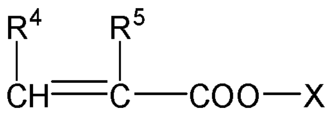

(3)

In general formula (3), $R^4$ is a hydrogen atom, a carboxyl group, or a salt thereof. $R^5$ is a hydrogen atom or a methyl group. X represents a hydrogen atom, an alkali metal atom, an alkaline-earth metal atom, an alkylammonium, an alkanolammonium, or ammonium. Specific examples of salts represented by $R^4$ includes alkali metal salts, alkaline-earth metal salts, alkylammonium salts, alkanolammonium salts, and ammonium salts, which are the same as the examples of salts represented by X.

Of these, the monomer (C-1) is preferably at least one selected from the group consisting of acrylic acid, methacrylic acid, maleic acid, fumaric acid, and salts thereof, for higher dispersibility and higher slump retention capability.

Examples of an oxyethylene group-containing unsaturated carboxylic acid ester (C-2) (hereinafter also referred to simply as a monomer (C-2)) include (poly)oxyethylene glycol (di)acrylic acid ester, (poly)oxyethylene glycol (di)methacrylic acid ester, methoxy(poly)oxyethylene glycol acrylic acid ester, methoxy(poly)oxyethylene glycol methacrylic acid ester, methoxy(poly)oxyethylene glycol maleic acid (di)ester, methoxy(poly)oxyethylene glycol fumaric acid (di)ester, and salts thereof. Any one or more of these may be used. The average number of moles of oxyethylene group added in the monomer (C-2) is not particularly limited and may be, for example, 1 to 50, 1 to 20, or 2 to 20. As used herein, the term "(poly)oxyethylene" means oxyethylene and/or polyoxyethylene and is meant to encompass both with and without parentheses. This also applies to (di)acrylic acid ester, (di)methacrylic acid ester, and (di)ester.

Of these, the monomer (C-2) is preferably methoxy (poly)oxyethylene glycol acrylic acid ester and/or methoxy (poly)oxyethylene glycol methacrylic acid ester, for higher dispersibility and higher slump retention capability.

For higher slump retention capability, the monomer (C) preferably includes the unsaturated carboxylic acid monomer (C-1).

[Other monomer]

In a copolymer according to the present embodiment, another monomer may be further used. Examples of such other monomers include acrylic acid esters such as 2-hydroxyethyl acrylate, benzyl acrylate, and stearyl acrylate and methacrylic acid esters such as 2-hydroxyethyl methacrylate, benzyl methacrylate, and stearyl methacrylate. Any one or more of these may be used.

[Copolymer]

The copolymer according to the present embodiment includes, as constituent monomers, at least one monomer selected from the group consisting of a monomer (A) and a monomer (B), and at least one monomer (C) selected from the group consisting of an unsaturated carboxylic acid monomer (C-1) and an oxyethylene group-containing unsaturated carboxylic acid ester (C-2). Therefore, the copolymer includes a structural unit derived from the monomer (A) and/or a structural unit derived from the monomer (B), and a structural unit derived from the monomer (C). As used herein, the term "constituent monomer" refers to a monomer constituting a copolymer, but does not necessarily mean a monomer used in polymerizing the copolymer and is meant to encompass, for example, monomers having a structure obtained by neutralization with an alkaline substance after polymerization.

The total content of the monomers (A) and (B) in the constituent monomers (i.e., in the copolymer) is preferably 1 mass% or more, more preferably 2 mass% or more, still more preferably 3 mass% or more, and preferably 20 mass% or less, more preferably 15 mass% or less, still more preferably 10 mass% or less. Also for each of the monomer (A)

and the monomer (B), the content thereof in the constituent monomers is preferably 1 mass% or more, more preferably 2 mass% or more, still more preferably 3 mass% or more, and preferably 20 mass% or less, more preferably 15 mass% or less, still more preferably 10 mass% or less. These percentages are based on 100 mass% of all the constituent monomers (which also applies to the content of the monomer (C) described below).

In the copolymer, the content of the monomer (C) in the constituent monomers (i.e., in the copolymer) is preferably 20 mass% or more, more preferably 50 mass% or more, still more preferably 60 mass% or more, further more preferably 70 mass% or more, and may be 80 mass% or more. The content of the monomer (C) is preferably 99 mass% or less, more preferably 98 mass% or less, still more preferably 97 mass% or less. In an embodiment, the content of the monomer (C) is 20 mass% or more and 99 mass% or less.

A copolymer according to an embodiment is a water-soluble polymer. To provide a copolymer with water-solubility, the percentage of the monomer (C) in the copolymer is increased. For example, when the content of the monomer (C) is 20 mass% or more, a water-soluble polymer can be obtained.

Whether a copolymer is water-soluble is determined as follows. Specifically, a 1 mass% aqueous solution of a copolymer (a solution obtained by adding water such that the copolymer content is 1 mass%) is used as a sample. The sample is injected into a quartz cell having an optical path length of 1 cm, and using a visible-ultraviolet spectrophotometer, the light transmittance at 25°C and a wavelength of 660 nm is measured. Copolymers having a light transmittance of 90%T or more are determined to be water-soluble. For example, in EXAMPLES described later, a "Model U-1800 Ratio Beam Spectrophotometer" manufactured by Hitachi High-Technologies Corporation was used as the visible-ultraviolet spectrophotometer.

The weight average molecular weight (Mw) of the copolymer according to the embodiment is not particularly limited, and may be, for example, 5000 or more, or 10000 or more, and may be 50000 or less, or 30000 or less. The molecular weight distribution (Mw/Mn) of the copolymer is also not particularly limited, and may be, for example, in the range of 1.3 to 2.5.

The weight average molecular weight and the molecular weight distribution can be measured by a known gel permeation chromatography (GPC) method against polyethylene glycol standards. The measurement conditions are not particularly limited and may be, for example, the following conditions.
GPC measurement conditions:

GPC apparatus: HLC-8020 RI detector (manufactured by TOSOH Corporation)
Column: TSK guard column PWXL, TSKgel G2500 PWXL, TSKgel G3000 PWXL, TSKgelG4000 PWXL, and TSKgel G6000 PWXL (manufactured by TOSOH Corporation) connected in series
Eluent: 0.08M aqueous sodium acetate solution/acetonitrile = 70/30 vol%
Flow rate: 0.7 mL/min
Temperature: 40°C

[Method for producing copolymer]

The method for producing the copolymer according to the present embodiment is not particularly limited. The copolymer can be produced using a known method.

For example, in the case of solvent polymerization, examples of solvents include water, alcohols having 1 to 3 carbon atoms, aromatic hydrocarbons such as benzene and toluene, aliphatic hydrocarbons such as hexane, ethyl acetate, acetone, and methyl ethyl ketone. Of these, water and alcohols are preferred, and water is more preferred.

In a polymerization reaction, a mixture of monomers may be partially or wholly placed in a reaction vessel, or may be continuously added dropwise. A polymerization initiator is preferably continuously added dropwise. Examples of polymerization initiators that can be used include hydrogen peroxide, persulfates (e.g., ammonium persulfate, sodium persulfate, and potassium persulfate), azoamidine compounds (e.g., 2,2'-azobis-2-methylpropioneamidine hydrochloride and 2,2'-azobis-2-(2-imidazolin-2-yl)propane hydrochloride), and azonitrile compounds (e.g., 2-carbamoylazoisobutyronitrile). A known reaction accelerator may be used in combination.

The reaction temperature is not particularly limited and preferably 0°C to 150°C, more preferably 30°C to 120°C, still more preferably 50°C to 100°C.

In polymerization, a known chain transfer agent may be used. Examples of such chain transfer agents include thiol-based chain transfer agents and secondary alcohols. Phosphorous acid, diphosphorous acid, sulfurous acid, and salts thereof may also be used.

After completion of the polymerization reaction, concentration adjustment by means of removal or addition of solvent, pH adjustment, purification, and the like can be performed. The pH of the resulting copolymer is preferably adjusted to 6 to 8. The pH adjustment can be performed, for example, using an alkaline substance such as a metal hydroxide, ammonia, or an organic amine. Thus, the copolymer according to the present embodiment may be neutralized using an alkaline substance after the polymerization reaction.

[Applications of copolymer]

The copolymer according to the present embodiment can be suitably used, for example, as a dispersant for inorganic particles such as cement, and is preferably used as a cement dispersant. This use is a non-limiting example, and the copolymer according to the present embodiment can also be used as a dispersant for various particles such as resin particles. The copolymer according to the present embodiment can also be used for applications of common water-soluble polymers, such as thickeners and emulsifiers.

[Dispersant]

A dispersant according to the present embodiment contains the above copolymer. Using the copolymer as a dispersant can improve the dispersibility and slump retention capability of particles such as cement. This is presumably, but not necessarily, because the presence of a specific hydrophobic group and a specific oxyalkylene group in the monomer (A) and/or the monomer (B) contained as constituent monomers facilitates adsorption of particles (dispersoid) such as cement and also suppresses aggregation of the particles.

In the dispersant, the copolymer may be used in the form of an aqueous solution or a dried powder. In addition to the copolymer, the dispersant may also contain any other appropriate component as long as the effects of the dispersant are not impaired.

Examples of other components include known dispersants such as sulfonic acid-based dispersants and polycarboxylic acid-based dispersants. In addition, known additives, for example, water-soluble macromolecular substances (e.g., methylcellulose and polyethylene glycol), concrete retarders (e.g., gluconic acid, sugar, and phosphonic acid), early strengthening agents and accelerators (e.g., calcium chloride, iron chloride, and potassium hydroxide), oxyalkylene-based antifoaming agents (e.g., polyoxyalkylenes and polyoxyalkylene alkyl ethers), other antifoaming agents (e.g., mineral oil-based, fat- and oil-based, and silicone-based), air-entraining agents (e.g., resin soap and saturated or unsaturated fatty acids), surfactants (anionic, cationic, nonionic, and amphoteric), waterproofing agents, corrosion inhibitors, crack inhibitors, and expansive additives may also be used.

[Dispersion composition]

A dispersion composition according to the present embodiment contains particles and the above dispersant, preferably particles, the above dispersant, and water. A dispersion composition according to an embodiment is a cement composition, and in this case, the cement composition preferably contains cement, the above dispersant, and water.

Examples of the cement contained in the cement composition include, but are not limited to, Portland cements (ordinary, high-early-strength, ultra-high-early-strength, moderate-heat, sulfate-resisting, and low-alkali types thereof), various blended cements (blast furnace cement, silica cement, and fly ash cement), white Portland cements, alumina cements, ultra-rapid hardening cements, cements for grouting, oil-well cements, low-heat cements, ultra-high-strength cements, cement-based solidifying agents, and ECO-cements (cements produced using at least one of municipal waste incineration ash and sewage sludge incineration ash as a raw material). Any one or more of these may be used.

The cement composition may contain any appropriate aggregate such as a fine aggregate or a coarse aggregate. Examples of aggregates include sand, gravel, crushed stone, water-granulated slag, recycled aggregates, and refractory aggregates such as siliceous, clay, zircon, high-alumina, silicon carbide, graphite, chrome, chrome-magnesia, and magnesia aggregates.

The content of the above dispersant in the dispersion composition such as a cement composition is not particularly limited, and any appropriate content can be employed depending on the intended use. For example, when the cement composition is mortar or concrete, the content of the above dispersant relative to 100 parts by mass of cement may be 0.001 parts by mass to 10 parts by mass, 0.01 parts by mass to 5 parts by mass, or 0.05 parts by mass to 3 parts by mass, in terms of copolymer content.

EXAMPLES

The present invention will now be described in more detail with reference to examples but is not limited to these examples. In the following structural formulae, EO represents an oxyethylene group, and PO represents an oxypropylene group.

[Synthesis of monomer (A)]

- Monomer (A-1):
In a reaction vessel equipped with a thermometer and a reflux tube, 230 g (1.0 mol) of a styrenated phenol (a mixture of monostyrenated phenol:distyrenated phenol:tristyrenated phenol = 72:27:1), 40 g (1.0 mol) of NaOH, and 210 g of acetone were placed, and the internal temperature was raised to 40°C with stirring. Next, 91 g (1.2 mol) of allyl chloride was added dropwise over 1 hour. After completion of the dropwise addition, a reaction was allowed to proceed while maintaining the temperature at 40°C for 2 hours. The reaction product was filtered, and NaCl, a by-product, was removed, after which acetone was removed under reduced pressure to obtain an allyl styrenated phenyl ether. The allyl styrenated phenyl ether in an amount of 290 g was placed in an autoclave, held with stirring at 200°C for 5 hours, and then allowed to react with 880 g (20 mol) of ethylene oxide in the presence of a potassium hydroxide catalyst at a pressure of 1.5 kg/$cm^3$ and a temperature of 130°C, to thereby obtain a monomer (A-1) represented by the following formula.

[Chem. 10]

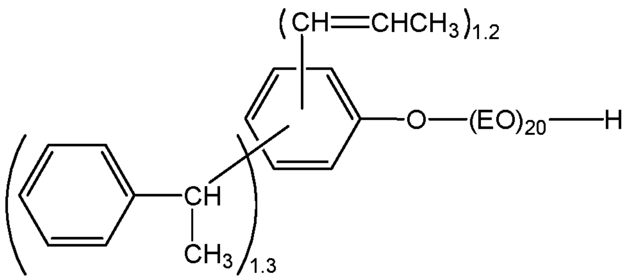

- Monomer (A-2):
The same procedure as used for the monomer (A-1) was performed except that the amount of ethylene oxide was changed to 440 g (10 mol), to thereby obtain a monomer (A-2) represented by the following formula.

[Chem. 11]

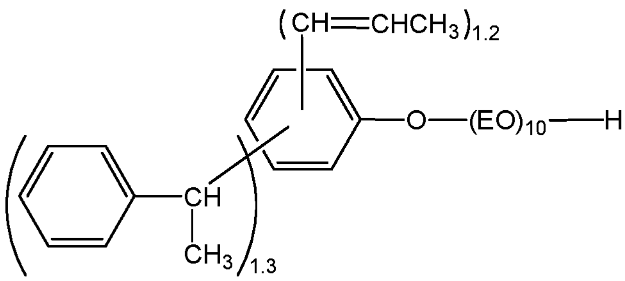

- Monomer (A-3):
The same procedure as used for the monomer (A-1) was performed except that the amount of ethylene oxide was changed to 2200 g (50 mol), to thereby obtain a monomer (A-3) represented by the following formula.

[Chem. 12]

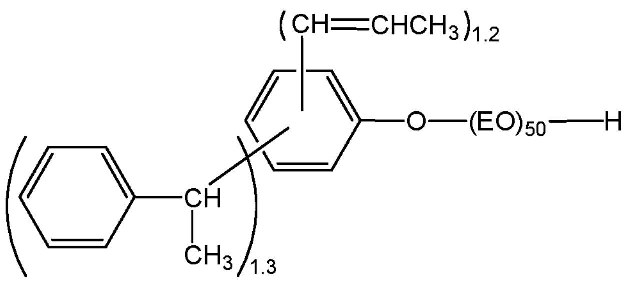

- Monomer (A-4):
The same procedure as used for the monomer (A-1) was performed except that the amount of ethylene oxide was

changed to 2640 g (60 mol), to thereby obtain a monomer (A-4) represented by the following formula.

[Chem. 13]

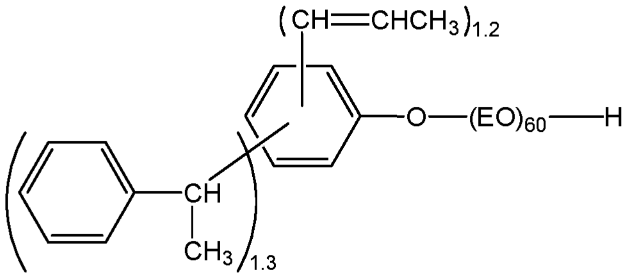

- Monomer (A-5):
  The same procedure as used for the monomer (A-1) was performed except that 880 g (20 mol) of ethylene oxide was replaced with a mixture of 660 g (15 mol) of ethylene oxide and 174 g (3 mol) of propylene oxide, to thereby obtain a monomer (A-5) represented by the following formula.

[Chem. 14]

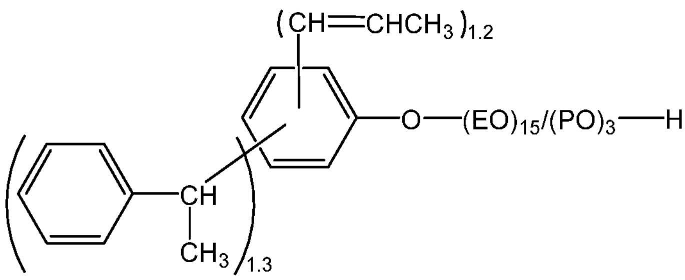

[Synthesis of monomer (B)]

- Monomer (B-1):
  In a reaction vessel equipped with a thermometer, a reflux tube, and a nitrogen inlet tube, 76 g (1.3 mol) of allyl alcohol and 8.4 g (0.15 mol) of potassium hydroxide were placed, and the temperature was raised to 80°C in a nitrogen atmosphere. Subsequently, 212 g (1.0 mol) of $\alpha$-olefin epoxide (C12 and C14 mixture) was added dropwise, and a reaction was allowed to proceed for 5 hours. After the residual allyl alcohol was distilled off under reduced pressure, washing with water and drying were performed. The dried product was transferred to an autoclave and allowed to react with 880 g (20 mol) of ethylene oxide in the presence of a potassium hydroxide catalyst at a pressure of 1.5 kg/$cm^3$ and a temperature of 130°C, to thereby obtain a monomer (B-1) represented by the following formula.

[Chem. 15]

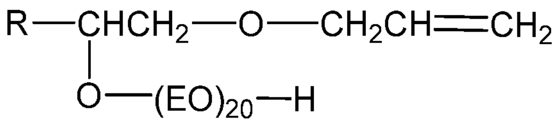

R: mixture of $C_{10}H_{21}$ and $C_{12}H_{25}$

- Monomer (B-2):
  The same procedure as used for the monomer (B-1) was performed except that the amount of ethylene oxide was changed from 880 g (20 mol) to 440 g (10 mol), to thereby obtain a monomer (B-2) represented by the following formula.

[Chem. 16]

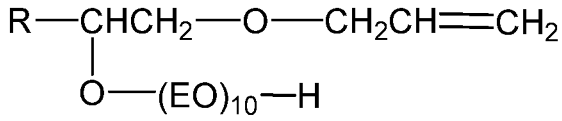

R: mixture of $C_{10}H_{21}$ and $C_{12}H_{25}$

- Monomer (B-3):
  The same procedure as used for the monomer (B-1) was performed except that the amount of ethylene oxide was changed from 880 g (20 mol) to 1760 g (40 mol), to thereby obtain a monomer (B-3) represented by the following formula.

[Chem. 17]

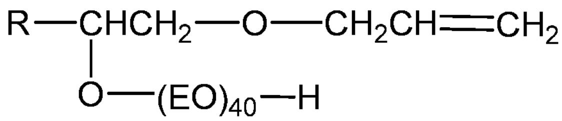

R: mixture of $C_{10}H_{21}$ and $C_{12}H_{25}$

- Monomer (B-4):
  The same procedure as used for the monomer (B-1) was performed except that the amount of ethylene oxide was changed from 880 g (20 mol) to 3520 g (80 mol), to thereby obtain a monomer (B-4) represented by the following formula.

[Chem. 18]

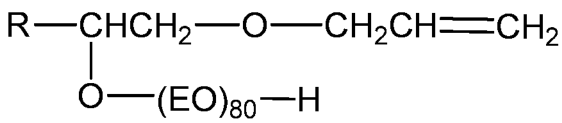

R: mixture of $C_{10}H_{21}$ and $C_{12}H_{25}$

- Monomer (B-5):
  The same procedure as used for the monomer (B-1) was performed except that 880 g (20 mol) of ethylene oxide was replaced with a mixture of 660 g (15 mol) of ethylene oxide and 290 g (5 mol) propylene oxide, to thereby obtain a monomer (B-5) represented by the following formula.

[Chem. 19]

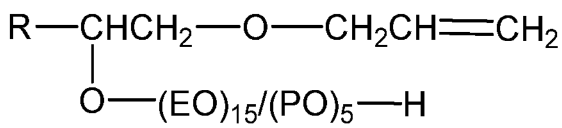

R: mixture of $C_{10}H_{21}$ and $C_{12}H_{25}$

[Examples 1 to 14 and Comparative Examples 1 to 4]

In a glass reactor equipped with a thermometer, a stirrer, a dropping funnel, a condenser, and a nitrogen inlet tube, 120 g of ion-exchanged water was placed. After the reactor was purged with nitrogen with stirring, the temperature was raised to 80°C. A mixture of 200 g of a monomer mixed at a ratio shown in Table 1 and 100 g of water and a mixture of 4 g of ammonium persulfate and 80 g of water were simultaneously added dropwise over 2 hours into the reactor held at 80°C. After completion of the dropwise addition, the reactor was further held at 80°C for 2 hours. Subsequently, the resulting product was cooled to 40°C and neutralized to a pH of 7.0 to 7.5 using a 24% aqueous sodium hydroxide solution. In this manner, aqueous solutions of copolymers of Examples 1 to 14 and Comparative Examples 1 to 4 having Mw and Mw/Mn values shown in Table 1 were obtained.

For the monomers in Table 1, A-1 to A-5 and B-1 to B-5 are synthesized as described above. Other monomers are as follows.

- AA: Acrylic acid (manufactured by Wako Pure Chemical Industries, Ltd.)
- MA: Methacrylic acid (manufactured by Wako Pure Chemical Industries, Ltd.)
- PMA: Methoxypolyethylene glycol (13) acrylate ("NEW FRONTIER MPE-600" manufactured by Dai-Ichi Kogyo Seiyaku Co., Ltd.)
- BnMA: Benzyl methacrylate ("LIGHT ESTER BZ" manufactured by Kyoeisha Chemical Co., Ltd.)
- SMA: Stearyl methacrylate ("LIGHT ESTER S" manufactured by Kyoeisha Chemical Co., Ltd.)

For the monomers AA and MA, Table 1 shows the contents of sodium salts (AA-Na, MA-Na) obtained by neutralization.

To determine whether the copolymers obtained were water-soluble, the light transmittance of a 1 mass% aqueous solution of each copolymer was measured by the method described above. The results are shown in Table 1.

The aqueous solutions of the copolymers obtained were adjusted to a solid concentration of 40 mass% to provide dispersants. The following evaluations were performed using the dispersants.

[Dispersibility]

A cement mortar was prepared in accordance with JIS R5201. Specifically, 3 g, on a solids basis, of the dispersant and 300 g of water were mixed together, and then added to a mixture obtained by kneading 600 g of a commercially available Portland cement with 1800 g of sand. The resulting mixture was stirred at low speed for 1 minute using a mortar mixer, and then further stirred at high speed for 2 minutes to prepare a cement mortar. The cement mortar was measured for flow values (mm) immediately after production and one hour after production in accordance with JIS R5201, and evaluated for dispersibility according to the following criteria. The results are shown in Table 1.

A: The flow value immediately after production is more than 170 mm.
B: The flow value immediately after production is more than 160 mm and 170 mm or less.
C: The flow value immediately after production is 160 mm or less.

[Slump retention capability]

Using the flow values measured for dispersibility, a slump retention rate was calculated by the following formula.

$$\text{Slump retention rate (\%)} = (\text{flow value measured one hour after production} / \text{flow value measured immediately after production}) \times 100$$

Using the calculated slump retention rate, slump retention capability was evaluated according to the following criteria. The results are shown in Table 1.

A: The slump retention rate is more than 90%.
B: The slump retention rate is more than 85% and 90% or less.
C: The slump retention rate is 85% or less.

[Table 1]

| | Monomer content (mass%) | | | | | | | | | | | | | | | Mw | Mw/Mn | Light transmittance (%) | Dispersibility | | | Slump retention capability | |
|---|---|---|---|---|---|---|---|---|---|---|---|---|---|---|---|---|---|---|---|---|---|---|---|
| | | | | | | | | | | | | | | | | | | | Flow value | | Evaluation | Retention rate (%) | Evaluation |
| | A-1 | A-2 | A-3 | A-4 | A-5 | B-1 | B-2 | B-3 | B-4 | B-5 | AA | MA | PMA | BnMA | SMA | | | | *1 | *2 | | | |
| Example 1 | 5 | | | | | | | | | | 80 | 15 | | | | 18,200 | 1.8 | 95 | 173 | 163 | A | 94 | A |
| Example 2 | 8 | | | | | | | | | | 72 | 20 | | | | 16,800 | 1.9 | 94 | 172 | 152 | A | 88 | B |
| Example 3 | | 5 | | | | | | | | | 80 | 15 | | | | 17,800 | 1.8 | 94 | 174 | 155 | A | 89 | B |
| Example 4 | | | 5 | | | | | | | | 80 | 15 | | | | 19,500 | 1.7 | 96 | 172 | 163 | A | 95 | A |
| Example 5 | | | | 5 | | | | | | | 80 | 15 | | | | 17,100 | 1.8 | 96 | 164 | 145 | B | 88 | B |
| Example 6 | 2 | | | | 5 | | | | | | 73 | 10 | 10 | | | 16,200 | 1.7 | 94 | 172 | 162 | A | 94 | A |
| Example 7 | | | | | | 5 | | | | | 85 | 10 | | | | 19,900 | 1.6 | 97 | 172 | 159 | A | 92 | A |
| Example 8 | | | | | | | 4 | | | | 76 | 20 | | | | 19,500 | 1.6 | 95 | 174 | 150 | A | 86 | B |
| Example 9 | | | | | | | | 7 | | | 73 | 20 | | | | 22,200 | 1.7 | 96 | 172 | 158 | A | 92 | A |
| Example 10 | | | | | | | | | 7 | | 78 | 15 | | | | 19,300 | 1.6 | 97 | 166 | 144 | B | 87 | B |
| Example 11 | | | | | | | | | | 5 | 80 | 15 | | | | 19,500 | 1.6 | 95 | 173 | 157 | A | 91 | A |
| Example 12 | | | | | | 5 | | | | | 82 | | 10 | 3 | | 17,300 | 1.7 | 94 | 171 | 157 | A | 92 | A |
| Example 13 | | | | | | 5 | | | | | 83 | | 10 | | 2 | 21,200 | 1.6 | 91 | 163 | 144 | B | 88 | B |
| Example 14 | 5 | | | | | 3 | | | | | 70 | 20 | | | 2 | 20,400 | 1.6 | 92 | 167 | 147 | B | 88 | B |
| Comparative Example 1 | | | | | | | | | | | 80 | 20 | | | | 21,900 | 1.7 | 97 | 162 | 132 | B | 81 | C |
| Comparative Example 2 | | | | | | | | | | | 80 | 12 | | 8 | | 18,200 | 1.7 | 56 | 155 | 126 | C | 81 | C |
| Comparative Example 3 | | | | | | | | | | | 82 | 15 | | | 3 | 18,800 | 1.6 | 78 | 142 | 115 | C | 81 | C |
| Comparative Example 4 | | | | | | | | | | | 73 | 10 | 10 | 5 | 2 | 16,300 | 1.7 | 44 | 146 | 119 | C | 82 | C |

*1: immediately after production *2: one hour after production

As shown in Table 1, in contrast to Comparative Examples 1 to 4 where the monomer (A), the monomer (B), or both were not used, in Examples 1 to 14 where these monomers were used, the flow values were large, that is, the dispersibility was high, and in addition, the slump retention rate was high, that is, the slump retention capability was high.

## Claims

1. A copolymer comprising, as constituent monomers: at least one monomer selected from the group consisting of a monomer (A) represented by general formula (1) below and a monomer (B) represented by general formula (2) below; and at least one monomer (C) selected from the group consisting of an unsaturated carboxylic acid monomer (C-1) and an oxyethylene group-containing unsaturated carboxylic acid ester (C-2), wherein a content of the monomer (C) in the constituent monomers is 20 mass% or more and 99 mass% or less:

[Chem. 1]

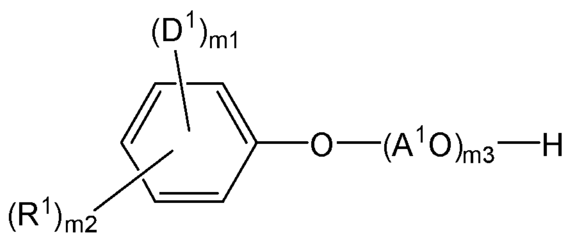

(1)

in formula (1), $D^1$ represents at least one polymerizable unsaturated group selected from the group consisting of groups $D^1$-1 and $D^1$-2 below, where $R^2$ represents a hydrogen atom or a methyl group; $R^1$ represents at least one group selected from the group consisting of groups $R^1$-1, $R^1$-2, and $R^1$-3 below; m1 and m2 are each 1 to 2 in terms of an average of the whole monomer (A); $A^1$ represents an alkylene group having 2 to 4 carbon atoms; and m3 represents an average number of moles of oxyalkylene groups added and is a number of 1 to 100:

[Chem. 2]

D1-1: 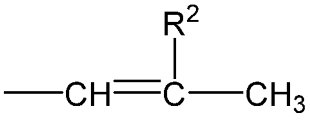

D1-2: 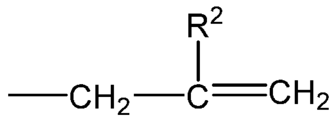

[Chem. 3]

R1-1: 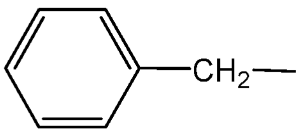

R1-2: 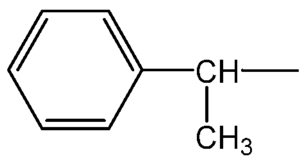

R1-3: 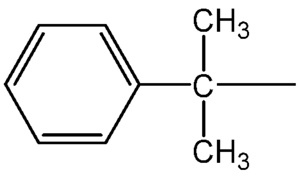

[Chem. 4]

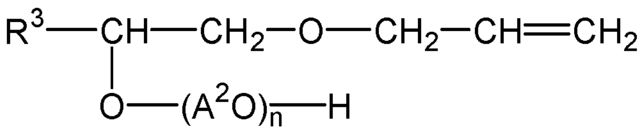

(2)

in formula (2), $R^3$ represents an alkyl group having 8 to 14 carbon atoms, $A^2$ represents an alkylene group having 2 to 4 carbon atoms, and n represents an average number of moles of oxyalkylene groups added and is a number of 1 to 100.

**2.** A water-soluble copolymer comprising, as constituent monomers: at least one monomer selected from the group consisting of a monomer (A) represented by general formula (1) below and a monomer (B) represented by general formula (2) below; and at least one monomer (C) selected from the group consisting of an unsaturated carboxylic acid monomer (C-1) and an oxyethylene group-containing unsaturated carboxylic acid ester (C-2):

[Chem. 5]

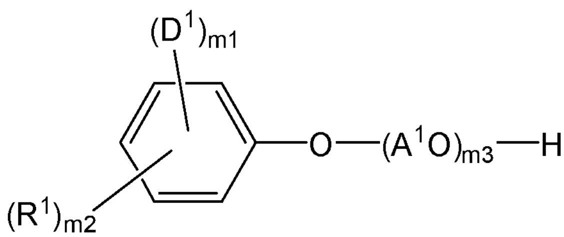

(1)

in formula (1), $D^1$ represents at least one polymerizable unsaturated group selected from the group consisting of groups $D^1$-1 and $D^1$-2 below, where $R^2$ represents a hydrogen atom or a methyl group; $R^1$ represents at least one group selected from the group consisting of groups $R^1$-1, $R^1$-2, and $R^1$-3 below; m1 and m2 are each 1 to 2 in terms of an average of the whole monomer (A) ; $A^1$ represents an alkylene group having 2 to 4 carbon atoms; and m3 represents an average number of moles of oxyalkylene groups added and is a number of 1 to 100:

[Chem. 6]

$D^1$-1: 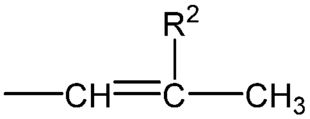

$D^1$-2: 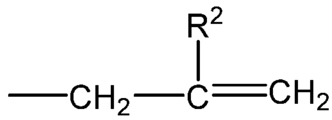

[Chem. 7]

$R^1$-1: 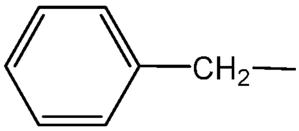

$R^1$-2: 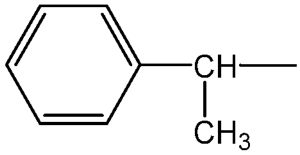

$R^1$-3: 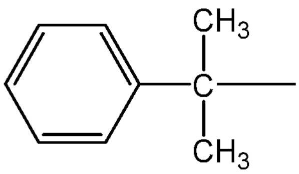

[Chem. 8]

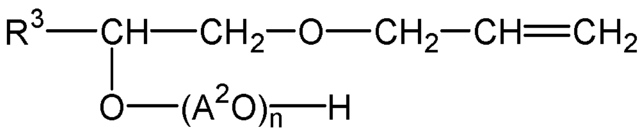

(2)

in formula (2), $R^3$ represents an alkyl group having 8 to 14 carbon atoms, $A^2$ represents an alkylene group having 2 to 4 carbon atoms, and n represents an average number of moles of oxyalkylene groups added and is a number of 1 to 100.

**3.** The copolymer according to Claim 1 or 2, wherein a total content of the monomers (A) and (B) in the constituent monomers is 1 mass% or more and 20 mass% or less.

**4.** An aqueous solution comprising the copolymer according to any one of Claims 1 to 3.

**5.** A dispersant comprising the copolymer according to any one of Claims 1 to 3.

**6.** A dispersion composition comprising particles and the dispersant according to Claim 5.

## INTERNATIONA1 SEARCH REPORT

InternationA1 application No.
PCT/JP2018/034316

A. CLASSIFICATION OF SUBJECT MATTER
Int.Cl. C08F290/06(2006.01)i, C04B24/26(2006.01)i, C04B24/32(2006.01)i, C08F299/02(2006.01)i, C08L33/00(2006.01)i, C04B103/40(2006.01)n

According to InternationA1 Patent Classification (IPC) or to both nationA1 classification and IPC

B. FIELDS SEARCHED

Minimum documentation searched (classification system followed by classification symbols)
Int.Cl. C08F290/06, C04B24/26, C04B24/32, C08F12/00-12/36, C08F16/26, C08F20/00-20/40, C08F299/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the internationA1 search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 7-118044 A (DKS CO., LTD.) 09 May 1995, claims, paragraphs [0011]-[0013], [0033]-[0054] (Family: none) | 1-6 |
| X<br>A | WO 2013/108588 A1 (DKS CO., LTD.) 25 July 2013, claims, paragraphs [0030]-[0031], [0045], [0046], [0072]-[0077], [0080] & US 2014/0323753 A1, claims, paragraphs [0032], [0033], [0047], [0048], [0081]-[0086], table 1 & US 2015/0011790 A1 & EP 2805974 A1 & CN 103797034 A & KR 10-2014-0049589 A & TW 201335195 A | 1-4<br>5, 6 |

☒ Further documents are listed in the continuation of Box C. ☐ See patent family annex.

* SpeciA1 categories of cited documents:
"A" document defining the generA1 state of the art which is not considered to be of particular relevance
"E" earlier application or patent but published on or after the internationA1 filing date
"L" document which may throw doubts on priority claim(s) or which is cited to establish the publication date of another citation or other speciA1 reason (as specified)
"O" document referring to an orA1 disclosure, use, exhibition or other means
"P" document published prior to the internationA1 filing date but later than the priority date claimed
"T" later document published after the internationA1 filing date or priority date and not in conflict with the application but cited to understand the principle or theory underlying the invention
"X" document of particular relevance; the claimed invention cannot be considered novel or cannot be considered to involve an inventive step when the document is taken A1one
"Y" document of particular relevance; the claimed invention cannot be considered to involve an inventive step when the document is combined with one or more other such documents, such combination being obvious to a person skilled in the art
"&" document member of the same patent family

| Date of the actuA1 completion of the internationA1 search | Date of mailing of the internationA1 search report |
|---|---|
| 26 November 2018 (26.11.2018) | 04 December 2018 (04.12.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONA1 SEARCH REPORT**

InternationA1 application No.
PCT/JP2018/034316

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2015-13921 A (DKS CO., LTD.) 22 January 2015, claims, paragraphs [0053], [0054], [0068], [0081], [0092] & US 2016/0137755 A1 & WO 2015/001968 A1 & EP 3017864 A1, claims, paragraphs [0057], [0058], [0073], [0084], table 1 & TW 201506044 A & CN 105263613 A & KR 10-2016-0029025 A | 1-4<br>5, 6 |
| X<br>A | JP 6114868 B1 (DKS CO., LTD.) 12 April 2017, claims, paragraphs [0039], [0040], [0049]-[0064] & JP 2018-51484 A & WO 2018/061533 A1 | 1-4<br>5, 6 |
| X<br>A | JP 10-298211 A (ASAHI DENKA KOGYO KK.) 10 November 1998, claims, paragraphs [0066], [0072]-[0076] (Family: none) | 1-4<br>5, 6 |
| A | JP 2002-98825 A (SAKATA INX CORP.) 05 April 2002 (Family: none) | 1-6 |
| A | JP 11-322389 A (TOAGOSEI CO., LTD.) 24 November 1999 (Family: none) | 1-6 |
| A | JP 9-221517 A (DKS CO., LTD.) 26 August 1997 (Family: none) | 1-6 |
| A | JP 2007-238387 A (NIPPON SHOKUBAI CO., LTD.) 20 September 2007 & US 2006/0229388 A1 & KR 10-2006-0105614 A | 1-6 |
| A | JP 2015-970 A (DKS CO., LTD.) 05 January 2015 (Family: none) | 1-6 |
| A | WO 2013/058046 A1 (DKS CO., LTD.) 25 April 2013 & US 2014/0243552 A1 & EP 2769996 A1 & CN 103890014 A & KR 10-2014-0078682 A & TW 201330922 A | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016179926 A
- JP 2016023096 A
- WO 2013108588 A1
- JP 2015013921 A